# EUROPÄISCHE PATENTANMELDUNG

(11) **EP 4 635 964 A1**
(43) Veröffentlichungstag der Anmeldung: **22.10.2025**
(21) Anmeldenummer: 24170524.3
(22) Anmeldetag: 16.04.2024
(51) Int. Cl.: C07F 15/00

(54) **VERFAHREN ZUR HERSTELLUNG METALLORGANISCHER VERBINDUNGEN**

(71) Anmelder: Umicore AG & Co. KG, 63457 Hanau-Wolfgang (DE)
(72) Erfinder: DOPPIU, Angelino, 63500 Seligenstadt (DE); JOHNS, Adam, Claremont, 91711 (US); GOULINIAN, Kristina, Glendale, 91203 (US); KOCH, Alexander, 63549 Ronneburg (DE)
(74) Vertreter: Clauswitz, Kai-Uwe Wolfram

(57) **Zusammenfassung**

Die Erfindung betrifft ein Verfahren zur Herstellung einer Verbindung gemäß der allgemeinen Formel 1 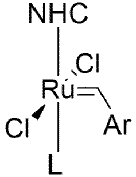 durch Umsetzung einer Verbindung der Formel 2 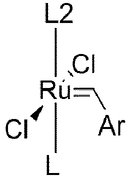 mit einer NHC-Ligand-Vorläuferverbindung der Formel, bei der die NHC-Ligand-Vorläuferverbindung mit einer Base in situ zu dem freien NHC-Liganden umgesetzt wird, der mit der Verbindung der Formel 2 ohne Zwischenisolierung in einer Ein-Topf-Reaktion zur Verbindung der Formel 1 reagiert.

## Beschreibung

K. Kuhn und R. H. Grubbs beschrieben eine einstufige Methode zur Herstellung symmetrischer 1,3-Diarylimidazolinium-Salze und zwei zweistufige Methoden zur Darstellung unsymmetrischer 1,3-Diarylimidazolinium-Salze, wobei Aryl = Phenyl, Naphthyl oder Anthracenyl. (WO 2009/062171 A1: unsubstituierte oder substituierte Arylreste; Organometallics 2008, 10 (10), 2075 - 2077: substituierte Arylreste) Alle drei Verfahren sehen Formamidine als Edukte vor und werden solvensfrei durchgeführt. Sie funktionieren gut mit elektronenreichen Anilinen als Edukten, nicht aber mit Anilinen, welche sehr sperrige oder elektronenziehende Substituenten tragen. Ausgehend von Anilinen mit wenig sperrigen Substituenten konnten symmetrische Imidazolinium-Salze in einer Eintopfsynthese hergestellt werden. Dabei fungierte das *in situ* gebildete Formamidin auch als Base (vgl. WO 2009/062171 A1: [0010], [0032], [0036], [0052], Examples 13 - 18; Organometallics 2008, 10 (10), 2075 - 2077, Table 2 und Supporting Information, Seite 2 - 4). In WO 2009/062171 A1 ist zwar offenbart, dass mittels der vorgestellten Verfahren auch Imidazolinium-Salze erhältlich sein sollen, welche beispielsweise ein Tosylat- oder Triflat-Anion aufweisen. Bei sämtlichen synthetisierten Verbindungen handelt es sich jedoch um 1,3-Diphenyl-substituierte Imidazolinium-Halogenide, nämlich Chloride und Bromide. Zudem ist unvorteilhaft, dass für die Herstellung unsymmetrischer 1,3-Diarylimidazolinium-Salze der Einsatz eines zuvor aufgereinigten und isolierten Formamidins erforderlich ist. (vgl. WO 2009/062171 A1: [0064], Example 20 und [0065], Example 21; Organometallics 2008, 10 (10), 2075 - 2077, Table 1 und Supporting Information, Seite 6 und 7)
Weitere Verfahren zur Herstellung von Grubbs-Katalysatoren sind gezeigt in "Simple synthetic routes to ruthenium-indenylidene olefin metathesis catalysts" Doppiu, A., Nolan S. et al., Chem. Commun., 2011,47, 5022-5024 und "Comparative Investigation of Ruthenium-Based Metathesis Catalysts Bearing N-Heterocyclic Carbene (NHC) Ligands" Fürstner, A. et al., "Chemistry - A European Journal", 2001, Vol 7, Issue 15, Seiten 3236-3253.

Weitere Verfahren zur Herstellung von Hoveyda-Katalysatoren sind gezeigt in "Chelated Ruthenium Catalysts for Z-Selective Olefin Metathesis" Grubbs, R.H. et al., J. Am. Chem. Soc. 2011, 133, 22, 8525-8527.

Im Jahr 2011 wurde ein Verfahren zur Darstellung symmetrischer und unsymmetrischer Imidazolinium-Triflate publiziert, welches die Reaktion eines Formamidins mit (2-Bromethyl)diphenylsulfoniumtriflat (1,25 Moläquivalente) in Gegenwart von Diisopropylethylamin (DIPEA, *Hünig*-*Base*; 2,5 Moläquivalente) in einem polaren Lösemittel vorsieht. (E. M. McGarrigle, S. P. Fritz, L. Favereau, M. Yar, V. K. Aggarwal, Org. Lett. 2011, 13 (12), 3060 - 3063) Bei Verwendung von Ethylacetat oder Acetontril wurden innerhalb relativ kurzer Reaktionszeiten von 3 bzw. 2,5 Stunden sehr gute Ausbeuten von 90 % bzw. 91 % erzielt. Es konnten sowohl symmetrisch 1,3-disubstituierte Imidazolinium-Triflate dargestellt werden, wobei die Imidazolinium-Kationen zwei identische aromatische oder aliphatische Gruppen aufweisen, als auch unsymmetrische Imidazolinium-Triflate, deren Kationen entweder zwei unterschiedliche aromatische Substituenten tragen oder einen aromatischen und einen aliphatischen, nämlich einen unsubstituierten Phenylrest und einen 1-Adamantyl- oder Cyclohexylrest.

Viele Verfahren zur Herstellung von Metathese Katalysatoren verlaufen nicht stabil, liefern Produkte von ungenügender Qualität oder sind operativ schwierig durchzuführen. Es sollen die Produkte sauber, in sehr guter Ausbeute und Qualität und nach einfachen skalierbaren Prozesse hergestellt.

Der Erfindung liegt daher die Aufgabe zugrunde, diese und weitere Nachteile des Standes der Technik zu überwinden und ein Verfahren zur Verfügung zu stellen, mit welchem einfach, reproduzierbar und vergleichsweise kostengünstig als Metathesekatalysatoren geeignete Rutheniumkomplexe in hoher Reinheit und guter Ausbeute herstellbar sind. Das Verfahren soll sich weiterhin dadurch auszeichnen, dass es - mit vergleichbarer Ausbeute und Reinheit der Zielverbindungen - auch im industriellen Maßstab durchgeführt werden kann. Mittels dieses Verfahrens sollen Ruthenium(II)-Komplexe, welche einen NHC-Liganden (N-heterocyclischen Carbenliganden) aufweisen, einfach, reproduzierbar und vergleichsweise kostengünstig in hoher Reinheit und guter Ausbeute herstellbar sein. Weiterhin sind Ruthenium(II)-Komplexe und deren Zubereitungen Gegenstand der vorliegenden Erfindung.

Die Hauptmerkmale der Erfindung ergeben sich aus den Patentansprüchen.

Gelöst wird die Aufgabe durch ein Verfahren zur Herstellung einer Verbindung gemäß der allgemeinen Formel 1 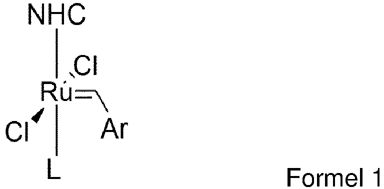
bei der NHC ein NHC-Ligand,
L ein Phosphin oder eine Alkoxygruppe ist,
Ar eine aromatische Gruppe ist, die mit L verbrückt sein kann, wenn L eine Alkoxygruppe ist, durch Umsetzung einer Verbindung der Formel 2 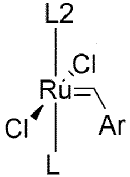
bei der L2 ein Phosphin ist und die übrigen Definitionen denen der Formel 1 entsprechen,
mit einer NHC-Ligand-Vorläuferverbindung der Formel 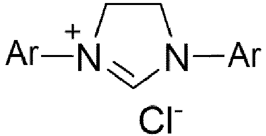
bei der Ar eine aromatische Gruppe ist und die NHC-Ligand-Vorläuferverbindung mit einer Base in situ zu dem freien NHC-Liganden umgesetzt wird, der mit der Verbindung der Formel 2 ohne Zwischenisolierung in einer Ein-Topf-Reaktion zur Verbindung der Formel 1 reagiert, dadurch gekennzeichnet, dass
das Verfahren in einem Kohlenwasserstoff als Lösemittel durchgeführt wird;
als Base Lithiumhexamethydisilazid (LiHMDS) verwendet wird;
die Verbindung der Formel 2 ausgewählt ist aus der Gruppe bestehend aus den Verbindungen der Formeln M100, M102 und M700; 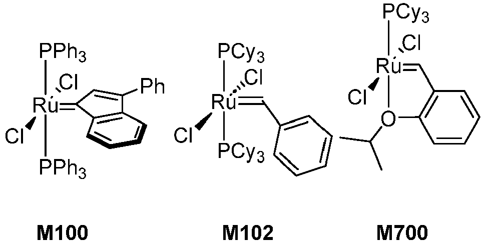
und die NHC-Ligand-Vorläuferverbindung ausgewählt ist aus der Gruppe bestehend aus den Verbindungen der Formeln 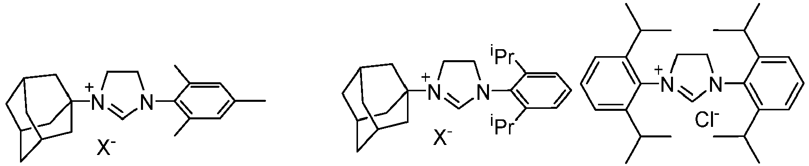
wobei die Abkürzungen der Substituente iPr für Isopropyl, Ph für Phenyl, Cy für Cyclohexyl und X für Cl, Tosylat und Tetrafluoroborat stehen.

Vorteilhaft werden mit diesem Verfahren Verbindungen der Formel 1 hergestellt, die ausgewählt sind aus der Gruppe bestehend aus den Verbindungen der Formeln M201, M206, M725 und M726

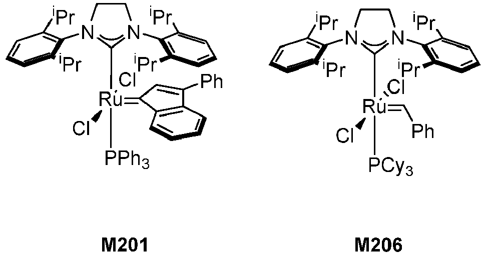

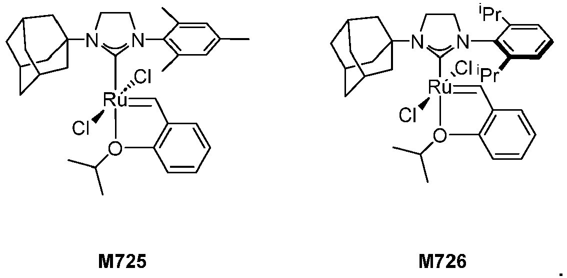

Gegenstand der Erfindung sind auch Verbindungen der Formeln M201, M206, M725 und M726 sowie deren Zubereitungen, deren Gehalt an Lithium ≥ 10 ppm und ≤ 100 ppm beträgt.

Durch Verwendung von Lithium-bis(trimethylsilyl)amid LiHMDS wird ein Carben aus der NHC-Ligand-Vorläuferverbindung, (NHC-Salz wie Chlorid, BF₄ oder Tosylat) in situ herstellt und direkt mit dem Ru-Edukt der Formel 2 in einem Kohlenwasserstoff als Lösemittel umgesetzt. Das Produkt kann z.B. durch Filtration und Wäsche isoliert werden. Die Ausbeuten liegen in der Regel über 85%.

Das Lösemittel der Reaktion ist ein Kohlenwasserstoff oder eine Kombination von Kohlenwasserstoffen, insbesondere ausgewählt aus der Gruppe bestehend aus Pentan, Hexan, Heptan, Decan, Dodecan und deren Isomeren, Petrolether und deren Kombinationen, insbesondere aber Heptan, Petrolether und deren Kombinationen. Mit "Petrolether" ist vorliegend ein farbloses Gemisch verschiedener gesättigter Kohlenwasserstoffe gemeint, beispielsweise von Pentan und Hexan.

Vorteile des Verfahrens gemäß der Verbindung sind insbesondere
- hohe Raum/Zeit-Ausbeute, da Eintopfverfahren
- hohe Reinheit
- einfache Durchführung des Verfahrens und dessen Skalierbarkeit

Unter "Raum-Zeit-Ausbeute" wird hier eine pro Raum und Zeit innerhalb eines Reaktionsbehältnisses bzw. Reaktionsgefäßes gebildete Produktmenge verstanden.

Besonders vorteilhaft ist, dass es sich bei dem hier beschriebenen Verfahren um eine mehrstufige Eintopfsynthese bzw. Eintopfreaktion handelt. Mit dem Ausdruck "mehrstufige Eintopfsynthese" ist vorliegend gemeint, dass das Verfahren zur Herstellung der Verbindung gemäß Formel 1 zwar in mehreren, insbesondere zwei Schritten, abläuft. Die aus der Umsetzung der NHC-Ligand-Vorläuferverbindung mit Lithium-bis(trimethylsilyl)amid LiHMDS erhaltenen Zwischenprodukte, werden aber *in situ* erzeugt. Das hier vorgestellte, insbesondere zweistufige Verfahren kann also vorteilhafterweise in ein- und demselben Reaktionsgefäß durchgeführt werden. Auf eine Isolierung, z. B. mittels Filtration, und/oder Aufreinigung, z. B. durch Waschen, des Zwischenprodukts kann verzichtet werden. Dies ist aus (atom-)ökonomischer und ökologischer Sicht besonders vorteilhaft.

Mit dem Ausdruck *"in situ*-Herstellung" bzw. *"in situ*-Erzeugung" ist gemeint, dass die Edukte, welche zur Synthese einer auf diese Weise herzustellenden Verbindung bzw. Zwischenproduktes, erforderlich sind, in einer geeigneten Stöchiometrie in einem Lösemittel oder Lösemittelgemisch zur Reaktion gebracht werden und das dabei entstehende Zwischenprodukt nicht isoliert wird. Vielmehr wird die Lösung oder die Suspension, welche das *in situ* erzeugte Zwischenprodukt umfasst, direkt weiterverwendet, d. h. ohne Isolierung und/oder weitere Aufreinigung.

Mit dem Begriff "Zubereitung" ist hier und im Folgenden eine Lösung, eine Suspension, eine Dispersion oder ein Gel gemeint. Die Zubereitung kann also, insbesondere in Abhängigkeit vom enthaltenen Lösemittel und/oder von der enthaltenen Verbindung gemäß Formel I, als Lösung, Suspension, Dispersion oder Gel vorliegen. Das Lösemittel kann auch ein Lösemittelgemisch sein. Bei dem Lösemittel kann es sich auch um ein Lösemittelgemisch handeln, welches zwei oder mehr Lösemittel umfasst. Das Lösemittel in der Zubereitung ist mit dem als Reaktionsmedium verwendeten Lösemittel identisch und somit ein Kohlenwasserstoff, insbesondere ausgewählt aus der Gruppe bestehend aus Pentan, Hexan, Heptan, Decan, Dodecan und deren Isomeren, Petrolether und deren Kombinationen, insbesondere aber Heptan, Petrolether und deren Kombinationen.

Vorteilhafterweise enthält das Reaktionsgemisch nach Beendigung der Umsetzung gemäß in der Regel ausschließlich die gewünschte Zielverbindung, das Lösemittel S_{R}, die als Nebenprodukte angefallene Verbindung Base-HX, nicht umgesetzte Base LiHMDS. Das Lösemittel, das Nebenprodukt Base-HX und die nicht umgesetzte Base lassen sich mittels einfacher und weniger Arbeitsschritte quantitativ oder nahezu quantitativ entfernen.

Eine Variante des Verfahrens umfasst die Isolierung als weiteren Verfahrensschritt. Die hergestellten Verbindung gemäß der allgemeinen Formel I können einer Filtration und/oder eine Zentrifugation und/oder Dekantation unterworfen werden, jedoch ist eine Filtration ausreichend.

Insgesamt gestaltet sich die gegebenenfalls vorgesehene Aufreinigung und/oder Isolierung der Zielverbindung gemäß Formel I relativ einfach und kostengünstig.

Die hohe Reinheit, insbesondere die Abwesenheit von Halogenid-Anionen, der mittels des weiter oben beschriebenen Verfahrens erhältlichen Imidazolinium-Salze ist mit Blick auf ihre Einsatzgebiete, beispielsweise als Organokatalysatoren oder als NHC-Präkursoren, besonders vorteilhaft. Denn bei Verwendung der so erhältlichen Imidazolinium-Salze als NHC-Vorläuferverbindungen für die Synthese von *Grubbs-* oder *Hoveyda*-Katalysatoren der zweiten Generation werden unerwünschte Anionen-Austauschreaktionen am Ruthenium verhindert. Dies ist besonders vorteilhaft, weil die vorgenannten Austauschreaktionen nicht oder nur sehr schwierig auftrennbare Produktgemische zum Ergebnis haben, wie weiter oben dargelegt wurde.

Die Isolierung der Verbindung der Formel 1, beispielsweise eines *Grubbs*-Katalysators der zweiten Generation oder eines *Hoveyda*-Katalysators der zweiten Generation, als Zubereitung oder als Substanz kann weitere Verfahrensschritte umfassen, wie z. B. die Reduzierung des Volumens der Mutterlauge, d. h. Einengen, die Zugabe eines Lösemittels und/oder einen Lösemittelaustausch, um eine Fällung des Produktes aus der Mutterlauge zu erzielen und/oder Verunreinigungen und/oder Edukte zu entfernen, Waschen. Die vorgenannten Schritte können jeweils in unterschiedlichen Reihenfolgen und Häufigkeiten vorgesehen sein.

Insgesamt gestaltet sich die gegebenenfalls vorgesehene Aufreinigung und/oder Isolierung der metallorganischen Verbindung, welche einen *N*-heterozyklischen Carbenliganden aufweist, relativ einfach und kostengünstig.

Im Allgemeinen kann das als Substanz isolierte Endprodukt noch Reste von Lösemitteln und/oder eines als Nebenprodukt angefallenen Salzes, beispielsweise LiCl, LiBF4 oder LiOTs, enthalten.

Eine als Substanz, vorteilhaft als Feststoff, isolierte Verbindung der Formel 1, weist mindestens eine Reinheit von 97 %, vorteilhaft von mehr als 97 %, insbesondere von mehr als 98 % oder 99 % auf. Die reproduzierbare Ausbeute beträgt, insbesondere in Abhängigkeit von der Wahl des Imidazolinium-Salzes gemäß Formel I, des Metallpräkursors sowie des Lösemittels, - auch im Falle einer Hochskalierung in Richtung industriellem Maßstab - üblicherweise ≥ 85 % oder ≥ 95 %.

Die Aufgabe wird zudem gelöst durch eine Zubereitung, insbesondere erhalten oder erhältlich nach einem Verfahren gemäß einer oder mehreren der weiter oben beschriebenen Ausführungsformen, insbesondere enthaltend eine oder mehrere Verbindungen der Formeln M201, M206, M725 und M726.

In einer Ausführungsform der Zubereitung ist das Lösemittel ausgewählt aus der Gruppe bestehend aus aliphatischen Kohlenwasserstoffen, vorteilhaft mit 5 bis 12 Kohlenstoffatomen, weitere Details zu dem Lösemittel sind weiter oben im Zusammenhang mit dem Verfahren zur Herstellung der Verbindungen angegeben.

Beispielsweise kann das Lösemittel ausgewählt sein aus der Gruppe bestehend aus Pentan, Hexan, Heptan, Decan, Dodecan, und deren Isomeren. Mit "Petrolether" ist vorliegend ein farbloses Gemisch verschiedener gesättigter Kohlenwasserstoffe gemeint, beispielsweise von Pentan und Hexan.

Die Tatsache, dass die mittels des weiter oben beschriebenen Verfahrens erhältlichen Verbindungen der Formel 1, beispielsweise Verbindungen der Formeln M201, M206, M725 und M726 sowie die Zubereitungen enthaltend eine solche Verbindung, nur geringe Verunreinigungen durch Lithiumionen aufweisen, ist mit Blick auf ihre Verwendung als Präkatalysatoren oder Katalysatoren besonders vorteilhaft.

Hinsichtlich weiterer Vorteile der hier beschriebenen metallorganischen Verbindungen und Zubereitungen, enthaltend eine solche metallorganische Verbindung, jeweils erhalten oder erhältlich nach einem Verfahren zur Herstellung solcher Verbindungen und Zubereitungen gemäß einer oder mehreren der weiter oben beschriebenen Ausführungsformen, wird auf die Vorteile verwiesen, welche für das weiter oben beschriebene Verfahren zur Herstellung einer solchen metallorganischen Verbindung oder Zubereitung genannt sind.

Weitere Merkmale, Einzelheiten und Vorteile der Erfindung ergeben sich aus dem Wortlaut der Ansprüche, aus den Beispielen bzw. Arbeitsvorschriften sowie aus der folgenden Beschreibung von Ausführungsbeispielen anhand der Figuren. Es zeigen:

### Beispiele:

### Materialien und Methoden

Alle Reaktionen wurden unter Standard-Inertgasbedingungen durchgeführt. Die eingesetzten Lösemittel und Reagenzien wurden nach Standardprozeduren gereinigt und getrocknet.

Alle kernresonanzspektroskopischen Messungen wurden an einem FT-NMR Spektrometer der Fa. Bruker durchgeführt. ¹³C-NMR-Spektren wurden standardmäßig ¹H-breitbandentkoppelt bei 300 K gemessen. ¹H- und ¹³C-NMR-Spektren wurden auf das entsprechende Restprotonensignal des Lösemittels als interner Standard kalibriert: ¹H: CD₂Cl₂: 5,32 ppm (Singulett); ¹³C: CD₂Cl₂: 53.8 ppm (Singulett). Die chemischen Verschiebungen werden in ppm angegeben und beziehen sich auf die *δ*-Skala.

Sämtliche Kontrollen mittels gaschromatographischer Analyse wurden unter den im Folgenden genannten Bedingungen durchgeführt:
▪ GC-Säule: HP-5 (Agilent Technologies), 30 m × 0,25 mm (ID) × 0,25 µm Filmdicke
▪ Injektortemperatur: 250 °C
▪ Detektortemperatur: 280 °C
▪ Ofentemperatur:
   ▪ Starttemperatur: 100 °C, Haltezeit: 1 min
   ▪ Aufheizrate 10 °C/min auf 270 °C, Haltezeit: 12 min
   ▪ Trägergas: Helium
   ▪ Durchschnittliche Gasgeschwindigkeit: 30 cm/s
   ▪ Splitverhältnis: 40,8 : 1

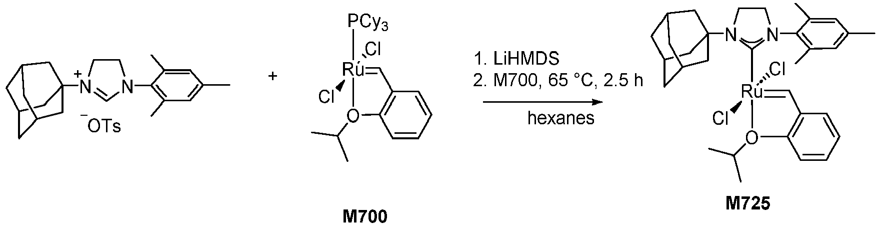

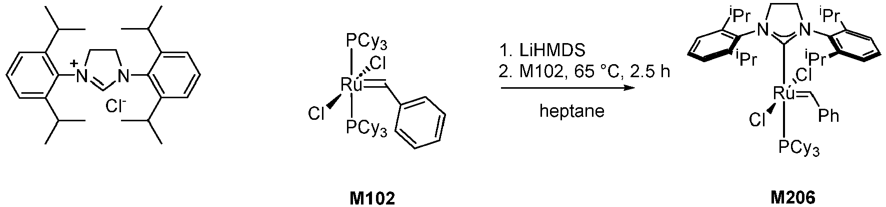

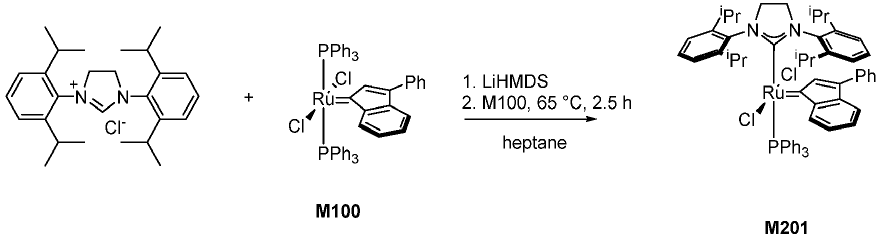

### 1. Synthese des Umicore Grubbs Catalyst M201 nach Verfahren gemäß der Erfindung

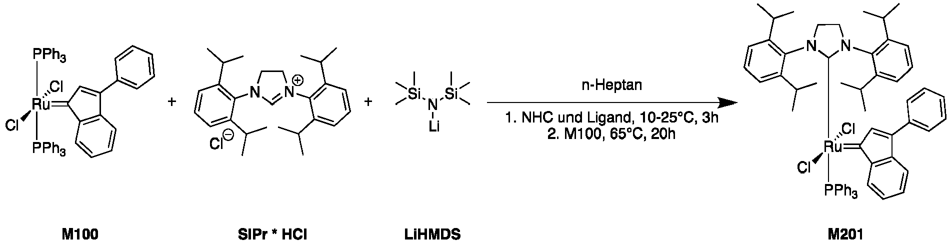

In einem 10L Reaktor, unter Argon Atmosphäre, wurden 3,5 L n-Heptan vorgelegt und LiHMDS (168 g, 0.97 mol, 1.40 Äq.) wurde unter Rühren portionsweise zugegeben. Das Reaktionsgemisch wurde auf <10°C abgekühlt und anschließend wurde SIPr * HCl (388 g, 0.84 mol, 1.20 Äq.) portionsweise zum Reaktionsgemisch dazu gegeben. Danach wurde die Reaktion für 2h bei 10°C und dann für 1h bei 25°C gerührt. Dann wurde Umicore Grubbs Catalyst M100 (725 g, 0.69 mol, 1.00 Äq.) und weitere 500 mL n-Heptan zugegeben. Das Reaktionsgemisch wurde auf 65°C aufgewärmt und es wurde für 20h gerührt. Dann wurde das Reaktionsgemisch auf 10°C abgekühlt und filtriert. Der zurückgebliebene dunkelrote Feststoff wurde einmal mit 250 mL Petrolether (50-70°C), dann vier Mal mit 250 mL Methanol und wieder einmal mit 250 mL Petrolether (50-70°C) gewaschen. Der erhaltene Feststoff wurde für 16 h bei 40°C im Vakuum getrocknet um Umicore Grubbs Catalyst M201 (583 g, 0.56 mol, 81 %) als feines, dunkelrotes Pulver zu erhalten. Li-Gehalt nach ICP-MS = 70 ppm. 31P-NMR Reinheit >98%.

**2. Synthese des Umicore Grubbs Catalyst M201 nach dem Stand der Technik:** "Simple synthetic routes to ruthenium-indenylidene olefin metathesis catalysts" Doppiu, A., Nolan S. et al., Chem. Commun., 2011,47, 5022-5024.

**3. Synthese des Umicore Grubbs Catalyst M206 nach dem Stand der Technik:** "Comparative Investigation of Ruthenium-Based Metathesis Catalysts Bearing N-Heterocyclic Carbene (NHC) Ligands" Fürstner, A. et al., "Chemistry - A European Journal", 2001, Vol 7, Issue 15, Seiten 3236-3253

### 4. Synthese des Umicore Grubbs Catalyst M206 nach Verfahren gemäß der Erfindung

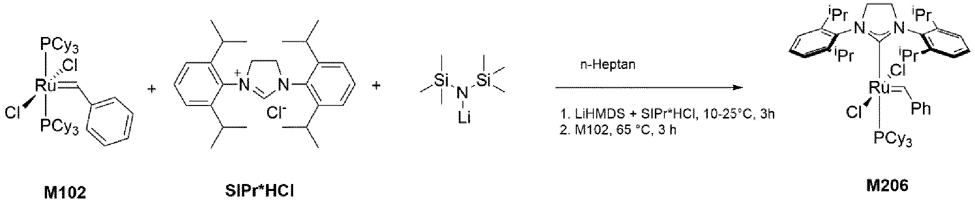

In einem 1L Reaktor, unter Argon Atmosphäre, wurden 600 mL n-Heptan vorgelegt und es wurde auf 5°C abgekühlt. Dann wurde LiHMDS (29.2 g, 169 mmol, 1.20 Äq) unter Rühren portionsweise zugegeben. Anschließend wurde auch SIPr *HCl (75.8 g, 176 mmol, 1.25 Äq.) portionsweise zugegeben und es wurden weitere 150 mL n-Heptan zugegeben. Nach der Zugabe wurde für 2h bei 10°C gerührt und dann für 1h bei 25°C. Danach wurde Umicore Grubbs Catalyst M102 (120.0 g, 141 mmol, 1.00 Äq) und weitere 150 mL n-Heptan zum Reaktionsgemisch zugegeben und es wurde für 3h bei 65°C gerührt. Anschließend wurde die Suspension wieder auf 20°C abgekühlt und filtriert. Der zurückgebliebene Filterkuchen wurde einmal mit 100 mL Petrolether (50-70°C), dann vier Mal mit 100 mL Methanol und wieder einmal mit 100 mL Petrolether (50-70°C) gewaschen. Der erhaltene Feststoff wurde für 16 h bei 40°C im Vakuum getrocknet um Umicore Grubbs Catalyst M206 (124 g, 132 mmol, 94 %) als dunkelgelben, kristallinen Feststoff zu erhalten. Li-Gehalt nach ICP-MS = 80 ppm. 31P-NMR Reinheit >98%.

### I. Darstellung der Imidazoliniumtosylate

### Beispiel I.1: (Ad-DIPP-NHC)OTs

### Schritt 1.A.

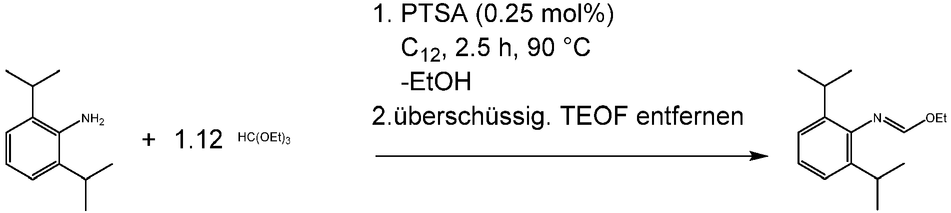

In einen 3-L-Dreihalsrundkolben, ausgestattet mit einem Überkopfrührer und einem Kurzwegkühler, wurden 2,6-Diisopropylanilin (Reinheit = 90 %, 343 g, 1,93 mol), *para-*Toluolsulfonsäure-Monohydrat (PTSA; 0,92 g, 4,84 mmol, 0,25 mol% bezogen auf 2,6-Diisopropylanilin), Triethylorthoformiat (TEOF; 321 g, 2,17 mol) und Dodecan (330 g, 440 mL, 1,93 mol). Das Reaktionsgemisch wurde 2,5 h lang unter langsamer Zufuhr von Inertgas bei einer Innentemperatur von 90 °C erhitzt. Nach 2,5 h hatte die Ethanolentwicklung aufgehört, und mittels quantitativer gaschromatographischer Analyse des Reaktionsgemisches wurde eine > 95%ige Umsetzung von 2,6-Diisopropylanilin festgestellt. Überschüssiges Triethylorthoformiat wurde im Vakuum entfernt (bestätigt durch quantitative GC-Analyse) und das Rohprodukt (Ethyl-*N-*(2,6-di*iso*propylphenyl)formimidat) wurde ohne weitere Reinigung zur Darstellung des Formidins (vgl. Schritt 1.B.) verwendet.

### Anmerkung:

Anstelle von Dodecan kann beispielsweise auch Isopar^{™} V (Isoparaffin-Flüssigkeit von ExxonMobil Chemical) eingesetzt werden.

### Schritt 1.B.

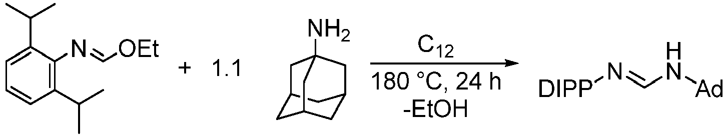

1-Adamantylamin (322 g, 2,13 mol) wurde zu dem Reaktionsgemisch aus Schritt 1.A. gegeben. Anschließend wurde das Reaktionsgemisch 24 Stunden lang unter einem langsamen Inertgasstrom bei einer Innentemperatur von 180 °C erhitzt. Nach 24 h hatte die Ethanolentwicklung aufgehört, und mittels quantitaiver gaschromatographischer Analyse des Reaktionsgemisches wurde eine > 95%ige Umsetzung von Ethyl-*N*-(2,6-di*iso*propylphenyl)formimidat festgestellt. Nach Abkühlen des Reaktionsgemisches auf Raumtemperatur wurde es ohne weitere Reinigung zur Darstellung von (Ad-DIPP-NHC)OTs (vgl. Schritt 1.C.) verwendet.

### Schritt 1.C.

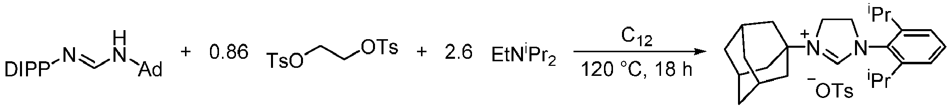

Nach Austausch des Kurzwegkondensators gegen einen effizienten Rückflusskühler wurden 1,2-Bis(tosyloxy)ethan (616 g, 1,66 mol) und *N,N-*Di*iso*propylethylamin (650 g, 5,03 mol) zu dem Reaktionsgemisch aus Schritt 1.B. gegeben. Anschließend wurde das Reaktionsgemisch 18 h lang unter langsamer Zufuhr von Inertgas bei einer Innentemperatur von 120 °C erhitzt. Danach ließ man das Reaktionsgemisch auf Raumtemperatur abkühlen. Der ausgefallene Feststoff wurde durch Filtration abgetrennt und in Dichlormethan (1,0 L) gelöst. Die Lösung wurde mit Wasser (3 × 1 L) gewaschen. Die vereinigten organische Phasen wurden über wasserfreiem Natriumsulfat getrocknet, und das Lösemittel wurde am Rotationsverdampfung entfernt. Der Rückstand wurde in Hexan (1,0 L) suspendiert. Der ausgefallene Feststoff wurde mittels Filtration isoliert, mit Hexan (2 × 300 mL) gewaschen und im Vakuum getrocknet. Es wurden 600 g bis 700 g der Zielverbindung 1-(1-Adamantyl)-3-(2,6-diisopropylphenyl)imidazoliniumtosylat isoliert (60 % - 70 % Gesamtausbeute).

### Anmerkung:

Anstelle von 1,2-Bis(tosyloxy)ethan kann beispielsweise auch 1,2-Bis(trifluoromethansulfonyl)ethan eingesetzt werden, um 1-(1-Adamantyl)-3-(2,6-di*iso*propylphenyl)imidazoliniumtriflat herzustellen

### Beispiel I.2: (Ad-Mes-NHC)OTs

### Schritt 2.A.

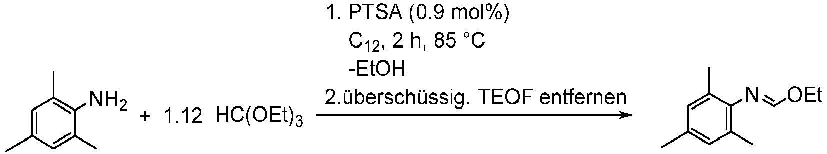

In einen 3-L-Dreihalsrundkolben, ausgestattet mit einem Überkopfrührer und einem Kurzwegkühler, wurden 2,4,6-Trimethylanilin (20 g, 0,148 mol), *para*-ToluolsulfonsäureMonohydrat (PTSA; 0,9 mol% bezogen auf 2,4,6-Trimethylanilin), Triethylorthoformiat (24,7 g, 1,67 mol), Dodecan (25,2 g, 33,6 mL, 0,148 mol). Das Reaktionsgemisch wurde 2 h lang unter langsamer Zufuhr von Inertgas bei einer Innentemperatur von 85 °C erhitzt. Nach 2 h hatte die Ethanolentwicklung aufgehört, und mittels quantitaiver gaschromatographischer Analyse des Reaktionsgemisches wurde eine > 95%ige Umsetzung von 2,4,6-Trimethylanilin festgestellt. Überschüssiges Triethylorthoformiat wurde im Vakuum entfernt (bestätigt durch quantitative GC-Analyse) und das Rohprodukt (Ethyl-*N-*(2,4,6-trimethylphenyl)formimidat) wurde ohne weitere Reinigung zur Darstellung des Formidins (vgl. Schritt 1.B.) verwendet.

### Anmerkung:

Anstelle von Dodecan kann beispielsweise auch Isopar^{™} V (Isoparaffin-Flüssigkeit von ExxonMobil Chemical) eingesetzt werden.

### Schritt 2.B.

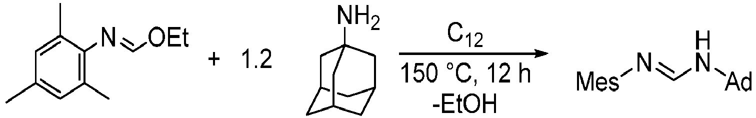

1-Adamantylamin (23,3 g, 0,154 mol) zu dem Reaktionsgemisch aus Schritt 2.A. gegeben. Anschließend wurde das Reaktionsgemisch 12 h lang unter einem langsamen Inertgasstrom bei einer Innentemperatur von 150 °C erhitzt. Nach 12 h hatte die Ethanolentwicklung aufgehört, und mittels quantitativer gaschromatographischer Analyse des Reaktionsgemisches wurde eine > 95%ige Umsetzung von Ethyl-N-(2,4,6-trimethylphenyl)formimidat festgestellt. Nach Abkühlen des Reaktionsgemisches auf Raumtemperatur wurde es ohne weitere Reinigung zur Darstellung von ((Ad-Mes-NHC)OTs (vgl. Schritt 2.C.) verwendet.

### Schritt 2.C.

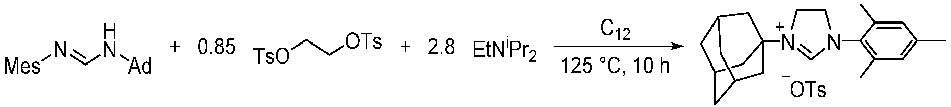

Nach Austausch des Kurzwegkondensators gegen einen effizienten Rückflusskühler wurden 1,2-Bis(tosyloxy)ethan (46,5 g, 0,126 mol) und *N,N-*Diisopropylethylamin (52,6 g, 0,407 mol) zu dem Reaktionsgemisch aus Schritt 2.B. gegeben. Anschließend wurde das Reaktionsgemisch 10 h lang unter langsamer Zufuhr von Inertgas bei einer Innentemperatur von 125 °C erhitzt. Danach ließ man das Reaktionsgemisch auf Raumtemperatur abkühlen. Der ausgefallene Feststoff wurde durch Filtration abgetrennt und in Dichlormethan (150 mL) gelöst. Die Lösung wurde mit Wasser (3 × 250 mL) gewaschen. Die vereinigten organische Phasen wurden über wasserfreiem Natriumsulfat getrocknet, und das Lösemittel wurde am Rotationsverdampfung entfernt. Der Rückstand wurde zweimal mit Aceton/Hexan (20 : 80, 100 mL) digeriert. Der ausgefallene Feststoff wurde mittels Filtration isoliert, mit Hexan (100 mL) gewaschen und im Vakuum getrocknet. Es wurden 37,5 g (60 % Gesamtausbeute) der Zielverbindung 1-(1-Adamantyl)-3-(2,4,6-trimethylphenyl)imidazoliniumtosylat isoliert.

### Anmerkung:

Anstelle von 1,2-Bis(tosyloxy)ethan kann beispielsweise auch 1,2-Bis(trifluoromethansulfonyl)ethan eingesetzt werden, um 1-(1-Adamantyl)-3-(2,4,6-trimethylphenyl)imidazoliniumtriflat herzustellen.

### II. Darstellung der Hoveyda-Grubbs-Katalysatoren der zweiten Generation

### Beispiel II.1: [1-(1-Adamantyl)-3-(2,6-diisopropylphenyl)-2-imidazolidinyliden]-dichloro(2-isopropoxybenzyliden)ruthenium(II) M726

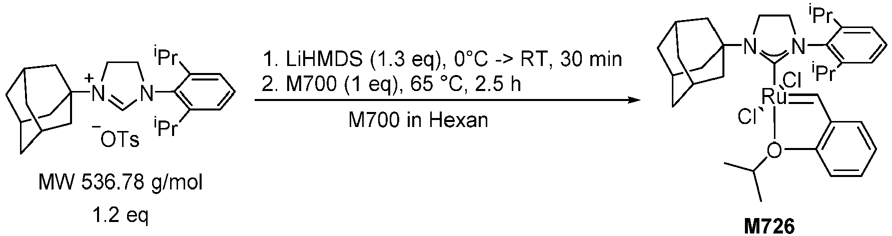

1-(1-Adamantyl)-3-(2,6-diisopropylphenyl)imidazoliniumtosylat (6,36 g, 12,0 mmol), Hexan (60 mL) und ein teflonbeschichteter Magnetrührstab wurden in einem 250 mL-Rundkolben gegeben. Die Suspension wurde auf 0 °C gekühlt, und Lithiumbis(trimethylsilyl)amid (2,24 g, 13,0 mmol) wurde portionsweise zugegeben. Danach ließ man das Reaktionsgemisch unter Rühren innerhalb von 30 Minuten auf Raumtemperatur erwärmen. Anschließend wurde eine Suspension von Tricyclohexylphosphino-dichloro(2-isopropoxybenzyliden)ruthenium(II) (Umicore^{®} M700; 6,00 g, 10,0 mmol) in 60 mL Hexan zugegeben und die Reaktionsmischung unter Rühren auf 65 °C erwärmt. Nach 2,5 Stunden ließ man die Reaktion auf Raumtemperatur abkühlen und isolierte den ausgefallenen Feststoff mittels Filtration. Das Rohprodukt wurde mit Hexan (2 × 40 mL) und anschließend mit Methanol (2 × 40 mL) gewaschen und im Vakuum getrocknet. Es wurden 6,50 g (95 % Ausbeute) der Zielverbindung [1-(1-Adamantyl)-3-(2,6-di*iso*propylphenyl)-2-imidazolidinyliden]dichloro(2-*iso*propoxybenzyliden)ruthenium(II) (Umicore^{®} M726) als grünes Pulver isoliert.

Herstellung des Katalysators M726 nach dem Stand der Technik: "Decomposition Pathways of Z-Selective Ruthenium Metathesis Catalysts" Grubbs, R.H. et al., J. Am. Chem. Soc. 2012, 134, 18, 7861-7866

### Beispiel II.2: [1-(1-Adamantyl)-3-(2,4,6-trimethylphenyl)-2-imidazolidinyliden]-dichloro(2-isopropoxybenzyliden)ruthenium(II) M725

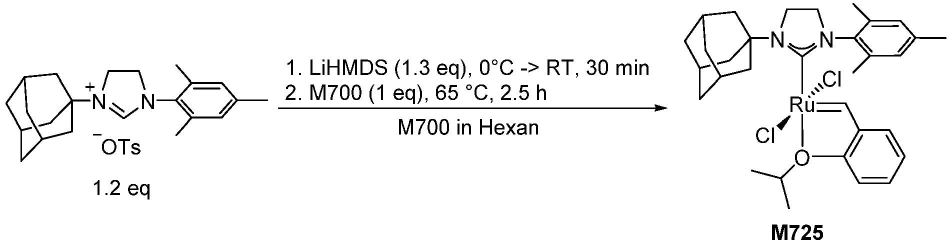

1-(1-Adamantyl)-3-(2,4,6-trimethylphenyl)imidazoliniumtosylat (0,20 g, 0,40 mmol), Hexan (2 mL) und ein teflonbeschichtete Magnetrührerstab wurden in ein 20 mL-Szintillationsfläschchen gegeben. Die Suspension wurde auf 0 °C gekühlt, und Lithiumbis(trimethylsilyl)amid (0,072 g, 0,43 mmol) wurde portionsweise zugegeben. Danach ließ man das Reaktionsgemisch unter Rühren innerhalb von 30 Minuten auf Raumtemperatur erwärmen. Anschließend wurde eine Suspension von Tricyclohexylphosphino-dichloro(2-*iso*propoxybenzyliden)ruthenium(II) (Umicore^{®} M700; 0,20 g, 0,33 mmol) in 2 mL Hexan zugegeben und die Reaktionsmischung unter Rühren auf 65 °C erwärmt. Nach 2,5 h ließ man die Reaktion auf Raumtemperatur abkühlen und isolierte den ausgefallenen Feststoff mittels Filtration. Das Rohprodukt wurde mit Hexan (2 × 4 mL) und anschließend mit Methanol (2 × 4 mL) gewaschen und im Vakuum getrocknet. Es wurden 0,51 g (85 % Ausbeute) der Zielverbindung [1-(1-Adamantyl)-3-(2,4,6-trimethylphenyl)-2-imidazolidinyliden]dichloro(2-isopropoxybenzyliden)ruthenium(II) (Umicore^{®} M725) als grünes Pulver isoliert.

Herstellung des Katalysators M725 nach dem Stand der Technik: "Chelated Ruthenium Catalysts for Z-Selective Olefin Metathesis" Grubbs, R.H. et al., J. Am. Chem. Soc. 2011, 133, 22, 8525-8527

### Anmerkung zu Beispiel II.1 und Beispiel II.2:

Umicore^{®} M700 kann jeweils auch als Feststoff zugegeben werden.

Die Erfindung ist nicht auf eine der vorbeschriebenen Ausführungsformen beschränkt, sondern in vielfältiger Weise abwandelbar.

Man erkennt, dass die Erfindung unsymmetrisch 1,3-disubstituierte Imidazolinium-Salze betrifft, nämlich Mesylate, Benzolsulfonate, Tosylate und Triflate. Gegenstand der Erfindung sind außerdem ein Verfahren zur Herstellung solcher unsymmetrisch 1,3-disubstituierter Imidazolinium-Salze und ihre Verwendung als Vorläuferverbindungen für NHC-Liganden. Zudem betrifft die Erfindung ein Verfahren zur Herstellung von metallorganischen Verbindungen, beispielsweise von Ruthenium(II)-Komplexen, welche einen unsymmetrisch 1,3-disubstituierten NHC-Liganden aufweisen, unter Verwendung von Imidazolinium-Salzen des vorgenannten Typs. Weiterhin sind Gegenstand der Erfindung metallorganische Verbindungen, beispielsweise Ruthenium(II)-Komplexe, welche einen unsymmetrisch 1,3-disubstituierten NHC-Liganden aufweisen und insbesondere nach dem vorgenannten Verfahren erhalten oder erhältlich sind.

Mittels des hier beschriebenen Eintopfverfahrens sind Imidazolinium-Salze erhältlich, welche keine Halogenid-Anionen aufweisen und deren Imidazolinium-Kationen jeweils zwei, insbesondere sterisch anspruchsvolle, *N*-Substituenten tragen. Bei Letzteren handelt es sich um einen aliphatischen Substituenten, nämlich einen 1-Adamantylrest, und einen aromatischen, nämlich einen sterisch weniger anspruchsvollen unsubstituierten Phenylrest oder einen sterisch anspruchsvollen substituierten Phenylrest, welcher wenigstens zwei Alkylsubstituenten trägt. Die vorgenannten unsymmetrisch substituierten Imidazolinium-Salze sind mittels der hier vorgestellten Eintopfsynthese einfach, reproduzierbar und vergleichsweise kostengünstig in hoher Reinheit, insbesondere Halogenid-Anionen-frei, und in guten Ausbeuten von ≥ 60 % oder ≥ 70 % herstellbar. Auch die erzielbaren Raum-Zeit-Ausbeuten sind zufriedenstellend. Das Verfahren ist - mit vergleichbarer Ausbeute und Reinheit der Zielverbindungen - auch im industriellen Maßstab durchführbar. Mittels des hier vorgestellten Verfahrens kann die Auswahl unsymmetrisch 1,3-disubstituierter Imidazolinium-Salze des vorgenannten Typs, insbesondere auch solcher mit zwei sterisch anspruchsvollen Liganden, auf einfache und vergleichsweise kostengünstige Weise erweitert werden.

Die hohe Reinheit, insbesondere die Abwesenheit von Halogenid-Anionen, der mittels des hier beschriebenen Verfahrens erhältlichen Imidazolinium-Salze ist mit Blick auf ihre Einsatzgebiete, beispielsweise als Organokatalysatoren oder als NHC-Präkursoren, von besonderer Bedeutung. Werden diese Imidazolinium-Salze als NHC-Vorläuferverbindungen für die Synthese von *Grubbs-* oder *Hoveyda*-Katalysatoren der zweiten Generation verwendet, werden unerwünschte Anionen-Austauschreaktionen verhindert. Folglich wird ausschließlich der jeweils gewünschte Ruthenium(II)-Komplex erhalten. Anionen-Austauschreaktionen treten bei der Darstellung metallorganischer Verbindungen, beispielsweise der vorgenannten Ruthenium(II)-Komplexe, regelmäßig auf, weil üblicherweise Imidazolinium-Halogenide als NHC-Präkursoren eingesetzt werden, zum Teil auch solche, welche andere Halogenid-Anionen aufweisen als die eingesetzten Metallpräkursoren oder Vorläuferkomplexe.

Sämtliche aus den Ansprüchen, der Beschreibung und den Figuren hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Verfahren zur Herstellung einer Verbindung gemäß der allgemeinen Formel 1 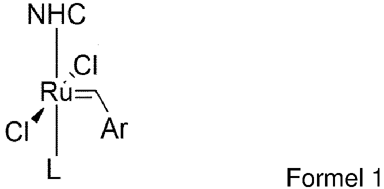
bei der NHC ein NHC-Ligand, L ein Phosphin oder eine Alkoxygruppe ist, Ar eine aromatische Gruppe ist, die mit L verbrückt sein kann, wenn L eine Alkoxygruppe ist, durch Umsetzung einer Verbindung der Formel 2 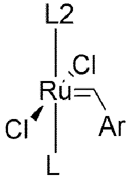
bei der L2 ein Phosphin ist und die übrigen Definitionen denen der Formel 1 entsprechen,
mit einer NHC-Ligand-Vorläuferverbindung der Formel 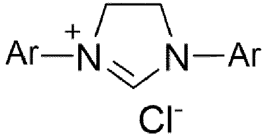
bei der Ar eine aromatische Gruppe ist und die NHC-Ligand-Vorläuferverbindung mit einer Base in situ zu dem freien NHC-Liganden umgesetzt wird, der mit der Verbindung der Formel 2 ohne Zwischenisolierung in einer Ein-Topf-Reaktion zur Verbindung der Formel 1 reagiert, **dadurch gekennzeichnet, dass**
das Verfahren in einem Kohlenwasserstoff als Lösemittel durchgeführt wird;
als Base Lithiumhexamethydisilazid (LiHMDS) verwendet wird;
die Verbindung der Formel 2 ausgewählt ist aus der Gruppe bestehend aus den Verbindungen der Formeln M100, M102 und M700; 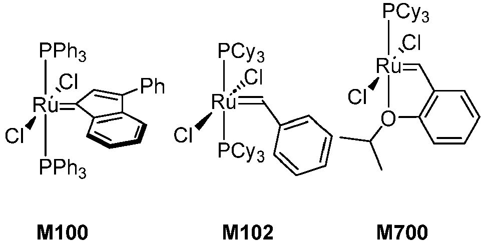
und die NHC-Ligand-Vorläuferverbindung ausgewählt ist aus der Gruppe bestehend aus den Verbindungen der Formeln 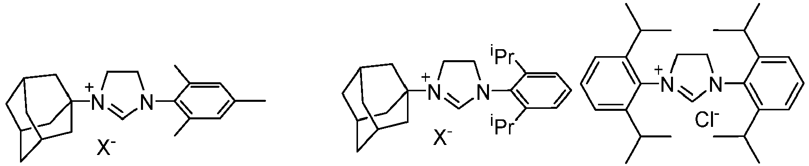
wobei die Abkürzungen der Substituente iPr für Isopropyl, Ph für Phenyl, Cy für Cyclohexyl und X für Cl, Tosylat und Tetrafluoroborat stehen.

2. Verfahren nach Anspruch 1, wobei die Verbindung der Formel 1 ausgewählt ist aus der Gruppe bestehend aus den Verbindungen der Formeln M201, M206, M725 und M726

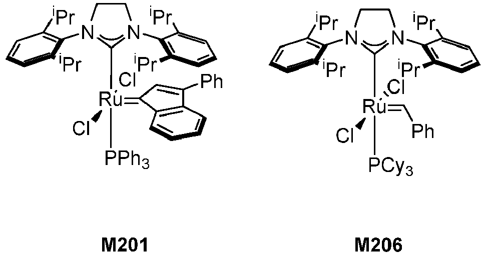

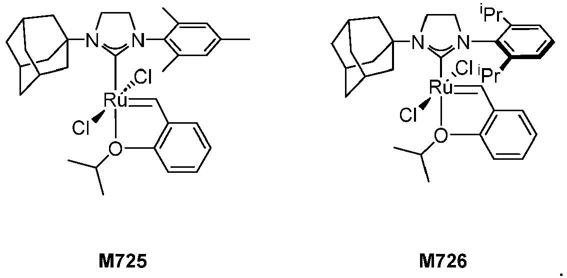

3. Verfahren nach Anspruch 1 oder 2, wobei als Lösemittel Kohlenwasserstoffe ausgewählt aus der Gruppe bestehend aus Pentan, Hexan, Heptan, Decan, Dodecan und deren Isomeren, Petrolether, und deren Kombinationen, insbesondere Hexan, Heptan, Petrolether und deren Kombinationen verwendet werden.

4. Verfahren nach einem oder mehreren der Ansprüche 1 bis 3, wobei die Reaktion von NHC-Ligand-Vorläuferverbindung mit LiHMDS bei einer Temperatur 10°C bis 40°C, insbesondere 12°C bis 25°C durchgeführt wird.

5. Verfahren nach einem oder mehreren der Ansprüche 1 bis 4, wobei die Reaktion von NHC-Ligand-Vorläuferverbindung mit LiHMDS für eine Zeit von weniger als fünf Stunden, insbesondere von 30 bis 180 Minuten durchgeführt wird.

6. Verfahren nach einem oder mehreren der Ansprüche 1 bis 5, wobei zunächst die Reaktion von NHC-Ligand-Vorläuferverbindung mit LiHMDS durchgeführt und erst dann die Verbindung der Formel 2 zugegeben wird.

7. Verfahren nach einem oder mehreren der Ansprüche 1 bis 6, wobei die Umsetzung der Formel 2 zur Verbindung der Formel 1 bei einer Temperatur von 40°C bis 100 °C, insbesondere 50°C bis 80°C, oder 60°C bis 70°C durchgeführt wird.

8. Verfahren nach einem oder mehreren der Ansprüche 1 bis 7, wobei die Umsetzung der Formel 2 zur Verbindung der Formel 1 für eine Zeit von 1 bis 24 Stunden, insbesondere 2 bis 20 Stunden durchgeführt wird.

9. Verfahren nach einem oder mehreren der Ansprüche 1 bis 8, wobei als weiterer Verfahrensschritt ein Reinigungsschritt durchgeführt wird.

10. Verfahren Anspruch 9, wobei der Reinigungsschritt einen oder mehrere Filtrationen, Waschen des Produkts oder deren Kombinationen beinhaltet.

11. Verfahren Anspruch 9 oder 10, wobei der das Produkt mit Hexan, Petrolether, Methanol oder deren Kombinationen gewaschen wird.

12. Verbindungen der Formeln M201, M206, M725 und M726 oder deren Zubereitungen, wobei der Gehalt an Lithium ≥ 10 ppm und ≤ 100 ppm beträgt.
